# EUROPEAN PATENT APPLICATION

(11) **EP 4 667 713 A1**
(43) Date of publication of application: **24.12.2025**
(21) Application number: 25184072.4
(22) Date of filing: 19.06.2025
(51) Int. Cl.: F01D 25/32

(54) **PARTICLE SEPARATOR OF A GAS TURBINE ENGINE**

(30) Priority: 21.06.2024 US 202418750487
(71) Applicant: PRATT & WHITNEY CANADA CORP., Longueuil, Québec J4G 1A1 (CA)
(72) Inventor: HU, Tin Cheung John, Markham, L6B 1B6 (CA)
(74) Representative: Dehns

(57) **Abstract**

A particle separator system (10) includes a diffuser (12) extending along an axis (A) to define a fluid path and a trap (34) having walls (36, 38, 40) that bound a cavity (35) in fluid communication with the fluid path. The diffuser (12) includes an inlet (20), an outlet (22), an inner wall (14), and an outer wall (16). The inlet (20) fluidly communicates with a fluid source. The outlet fluidly communicates with an exhaust. The inner wall (14) and the outer wall (16) diverge from the inlet (20) towards the outlet (22) and the outer wall (16) is radially outward from the inner wall (14). The cavity (35) fluidly communicates with the fluid path adjacent to the outer wall (16). The cavity (35) is open towards the inlet (20) of the diffuser (12).

## Description

### TECHNICAL FIELD

The present disclosure relates generally to gas turbine engines, and more particularly, to features for separating particles from the gas turbine engine flow path.

### BACKGROUND

The accumulation of particles within gas turbine engines can lead to increased wear and/or damage of certain components within the flow path. Further, high-temperature regions of the gas turbine engine can include cooling flow passages, effusion holes, and/or other cooling features that can be blocked by particle ingestion. While current particle separators are considered suitable for their intended purpose, additional measures to remove particles from gas turbine engine flow paths may improve gas turbine engine performance, reduce wear, and reduce damage to gas turbine engine components.

### SUMMARY

A particle separator system includes a diffuser extending along an axis to define a fluid path and a trap having walls that bound a cavity in fluid communication with the fluid path. The diffuser includes an inlet, an outlet, an inner wall, and an outer wall. The inlet fluidly communicates with a fluid source. The outlet fluidly communicates with an exhaust. The inner wall and the outer wall diverge from the inlet towards the outlet and, the outer wall is radially outward from the inner wall. The cavity fluidly communicates with the fluid path adjacent to the outer wall. The cavity is open towards the inlet of the diffuser.

### BRIEF DESCRIPTION OF THE DRAWINGS

FIG. 1A is a schematic view of an example particle separator system that depicts a diffuser with a trap for sequestering particles from the flow path.
FIG. 1B is a cross-sectional view taken along line B-B in FIG. 1A that depicts an outlet of the diffuser.
FIG. 2A is a schematic view of another example particle separator system that depicts the diffuser with multiple traps for sequestering particles from the flow path.
FIG. 2B is a cross-sectional view taken along line C-C in FIG. 2A that depicts the outlet of the diffuser.
FIG. 3A is a schematic view of another example particles separator system that depicts the diffuser with multiple traps for sequestering particles from the flow path.
FIG. 3B is a cross-sectional view taken along line D-D in FIG. 3A that depicts the outlet of the diffuser.
FIG. 4A is a schematic view of another example particle separator system that depicts an axial diffuser with one or more traps for sequestering particles from the flow path.
FIG. 4B is a schematic view of another example particle separator system that depicts an axial diffuser with multiple traps for sequestering particles from the flow path.
FIG. 5A is a schematic view of another example particle separator system that depicts a trap external to the diffuser.
FIG. 5B is a cross-sectional view taken along line E-E in FIG. 5A that depicts the outlet of the diffuser and the external trap.
FIG. 6A is a schematic view of another example particle separator system that depicts a trap external to the diffuser and extending through a casing.
FIG. 6B is a cross-sectional view taken along line F-F in FIG. 6A that depicts the outlet of the diffuser and the external trap.
FIG. 7A is a cross-sectional view of an axial diffuser with another example particle separator system that depicts a trap external to the diffuser.
FIG. 7B is a cross-sectional view of an axial diffuser with another example particle separator system that depicts a trap external to the diffuser and extending through a casing.

### DETAILED DESCRIPTION

As described herein, a particle separator system can be operatively associated with a diffuser of a gas turbine engine. Gas turbine engines ingest air through an inlet, which may include particles suspended within or entrained by the inlet air flow. At least a portion of the inlet air flow is directed into one or more compressor stages of the gas turbine engine (i.e., a core flow), which sequentially increases static pressure of the core flow. The compressor section discharges the core flow into a diffuser whereby static pressure can be recovered prior to the combustor. The diffuser can be a radial diffuser or an axial diffuser in which walls of the diffuser diverge in a flow direction. The diffuser feeds the core flow into a combustor where the core flow mixes with fuel and ignites during combustion. One or more turbine stages expand the combustion exhaust flow, extracting work to drive a propulsor (e.g., one or more propellers, one or more fans, a main rotor, or a tail rotor) and/or engine accessories (e.g., pumps, actuators, and/or electric machines, among other possible accessories). Core flow discharges from an exhaust nozzle, which in some gas turbine engines combines with bypass flow, to produce thrust.

Ingested particles wear and/or erode exposed components of the gas turbine engine. In high-temperature regions of gas turbine engine such as the combustor, the turbine section, and/or exhaust components, ingested particles can further obstruct and/or block cooling paths, combustor liner holes, effusion cooling holes, and/or otherwise damage other cooling features of the gas turbine engine in the engine hot section. Increased wear, erosion, and/or obstructed cooling paths decrease component life and/or decrease operational capability of the gas turbine engine.

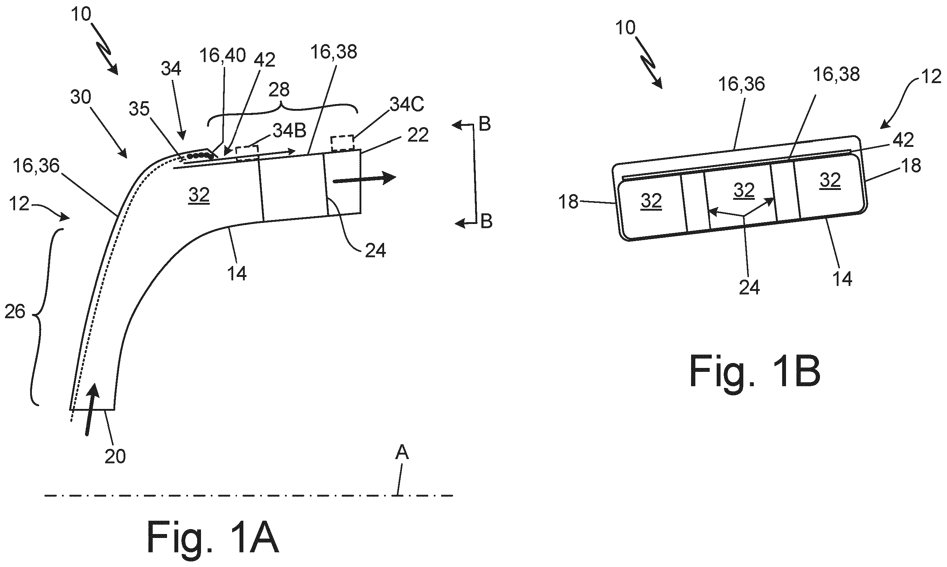

FIG. 1A and FIG. 1B depict particle separation system 10 deployed in relation to diffuser 12 of the gas turbine engine. Particle removal within diffuser 12 reduces a significant amount (number) and sizes of particles within the combustor, the turbine section, and exhaust section of gas turbine engine; thereby prevents or reduces blockage of effusion cooling holes, cooling passages, and/or other cooling features within the high-temperature region of the gas turbine engine. While particle separation system 10 is described in relation to diffuser 12, it shall be understood by those in the art that particle separation system 10 can be deployed in other regions of the gas turbine engine without detracting from the following disclosure.

Diffuser 12 can be a radial diffuser disposed downstream from a centrifugal compressor from which diffuser 12 receives compressed air flow. As depicted, diffuser 12 includes inner wall 14, outer wall 16, side walls 18, inlet 20, outlet 22, and particle separation system 10. In some examples, diffuser 12 further can include vanes 24. Inner wall 14, outer wall 16, and side walls 18 extend from inlet 20 in a primarily radial direction relative to engine axis A to form radial portion 26 of diffuser 12. Portions of inner wall 14, outer wall 16, and side walls 18 extend primarily in an axial direction relative to engine axis A to form axial portion 28 of diffuser. Radial portion 26 and axial portion 28 are joined by transition 30 formed by inner wall 14, outer wall 16, and side walls 18 in a region that transitions from the radial direction to the axial direction.

Air flows through diffuser 12 along a flow direction from inlet 20 to outlet 22. Accordingly, a component or feature of particle separation system 10 and/or diffuser 12 is "downstream" of another component or feature described herein if it is closer to outlet 22 along the direction of flow relative to the other component or feature. A component or feature of particle separation system 10 and/or diffuser 12 is "upstream" of another component or feature described herein if it is closer to inlet 20 along the direction of flow relative to the other component or feature. While FIG. 1A and FIG. 1B depicts a radial diffuser, components and/or features of particle separation systems 10 employed within axial diffusers, or another component, can be described as "downstream" or "upstream" in the same manner described above.

Inner wall 14 and outer wall 16 are spaced as shown in FIG. 1A to form diffusion chamber 32. Circumferential edges of inner wall 14 and outer wall 16 are joined by side walls 18 as depicted in FIG. 1B to form one of multiple radial diffuser tubes. Inner wall 14 and outer wall 16 and/or side walls 18 diverge in a flow direction from inlet to outlet 22. One or more vanes 24 extend from inner wall 14 to outer wall 16 to act on air flowing through diffusion chamber 32. In some examples, vanes 24 are disposed along axial portion 28. In further examples, vanes 24 can be disposed closer to outlet 22 than transition 30, or coinciding with outlet 22 in other examples. Vanes 24, in certain examples, can have a circumferential orientation adapted to deswirl or counteract swirl imposed by the centrifugal compressor. While a single diffuser tube is depicted for illustrative purposes in FIG. 1A and FIG. 1B, it is understood that diffuser 12 can include multiple diffuser tubes arranged in a circumferentially spaced array about engine axis A that, collectively, discharge into an annular region.

Particle separation system 10 includes at least one trap 34. As depicted in FIG. 1A and FIG. 1B, trap 34 is formed by portions of outer wall 16, which bound cavity 35. Trap 34 is disposed between outlet 22 and transition 30 of diffuser 12 such that centrifugal acceleration of particles entrained within the flow promotes accumulation of particles within trap 34 along a radially outer region of diffuser 12. In examples of diffuser 12 that include vanes 24, trap 34 can be located between vanes 24 and transition 30, and/or between outlet 22 and vanes 24. As shown in FIG. 1A, trap 34 is disposed between vanes 24 and transition 30. Alternative locations of trap 34 are indicated by phantom lines at 34B and 34C. Examples of diffuser 12 can include trap 34 at any of the depicted positions, or at positions intermediate to those depicted. As the position of trap 34 approaches transition 30, trap 34 tends to collect higher density of particle numbers relative to trap positions that are relatively closer to outlet 22, which tend to collect smaller number density of particles. Larger particles have higher mass relative to smaller particles and are unable to follow the rapid turning of the flow path due to centrifugal acceleration imposed on the flow and particles through transition 30 of diffuser 12. Accordingly, the position of trap 34, or multiple traps 34 discussed below, can be selected based on a desired or predetermined average particle size, or number density of the particles.

Examples of trap 34 which are integrated with outer wall 16 include inlet wall segment 36, outlet wall segment 38, and end wall 40. The portion of outlet wall 16 upstream from trap 34 and extending from inlet 20 to trap 34 forms inlet wall segment 36. Inlet wall segment 36 can extend through radial portion 26 and/or transition 30 of diffuser 12. Outlet wall segment 38 overlaps a region of inlet wall segment 36 to define cavity 35 therebetween. Cavity 35 of trap 34 is open towards inlet 20 as defined by an inlet area between inlet wall segment 36 and a distal end (i.e., a free end) of outlet wall segment 38. End wall 40 extends between inlet wall segment 36 and outlet wall segment 38 to enclose, or partially enclose an end of trap 34 opposite the opening. Some examples of trap 34 are entirely enclosed by end wall 40 to form a dead-ended cavity. Other examples of trap 34 include are partially enclosed by end wall 40 such that slot 42 is formed between end wall 40 and outlet wall segment 38. Slot 42 permits a portion of air flow to exit trap 34 and thereby reduces flow disruption caused by trap 34. In lieu of slot 42, trap 34 can include one or more apertures that fluidly connect cavity 35 to a region exterior to diffuser 34. To promote flow towards slot 42 (or aperture), end wall 40 can extend at an oblique angle radially inwards towards outlet wall segment 38 and in a direction opposite the opening of trap 34 such that trap 34 tapers towards slot 42. Slot 42 discharges from trap 34 into a region exterior to diffuser 12, for example, a region bound by a casing assembly circumscribing diffuser 12.

In some examples, particle separation system 10 can include multiple traps 34. For example, particle separation system 10 can include two traps 34, three traps 34, or more than three traps 34 to achieve a desired particle separation. Each trap 34 in a multi-trap particle separation system can include any of the features described above in reference to FIG. 1A-1B. In some examples, traps 34 can be identical except for a position along outer wall 16. In other examples, some or all of traps 34 can have a different shape and/or a different size and/or can include slot 42.

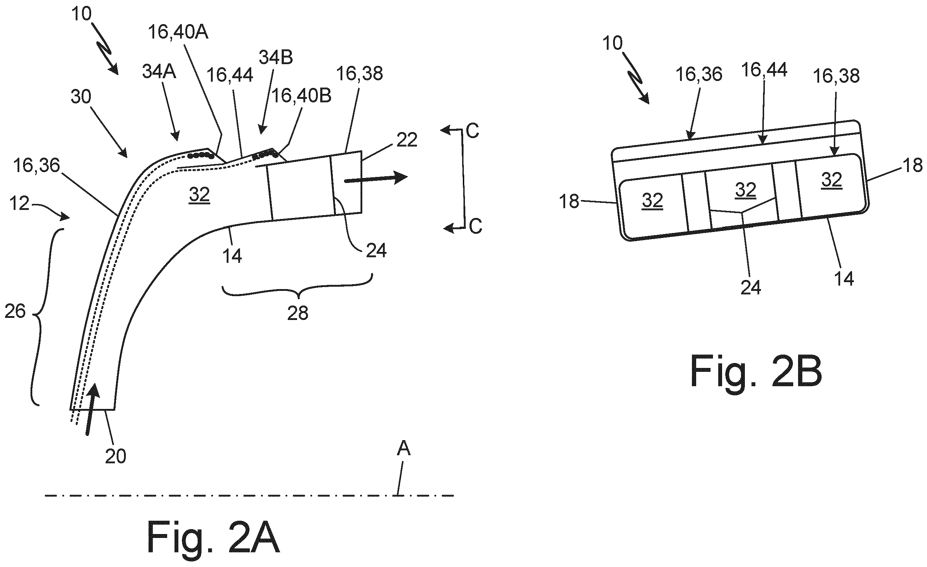

FIG. 2A is a cross-sectional view of diffuser 12 that includes particle separator system 10, which includes traps 34A and 34B. FIG. 2B is a cross-sectional view of radial diffuser 12 taken along line C-C in FIG. 2A that depicts outlet 22 of diffuser 12. Features of diffuser 12 and particle separator system 10 with like numbering are as described in reference to FIG. 1A and FIG. 1B. As depicted in FIG. 2A and 2B, diffuser 12 can be a radial diffuser.

Trap 34A and trap 34B are positioned between outlet 22 and transition 30, and more particularly, between vanes 24 and transition 30. Trap 34A includes inlet wall segment 36, intermediate wall segment 44, and end wall 40A. Trap 34B includes intermediate wall segment 44, outlet wall segment 38, and end wall 40B. The portion of outer wall 16 extending from inlet 20 to trap 34A forms inlet segment 36. Intermediate segment 44 of outer wall 16 is spaced radially inward relative to inlet wall segment 36 to form trap 34A in conjunction with end wall 40A. Intermediate wall segment 44 overlaps a portion of inlet wall segment 36 to form trap 34A and further overlaps a portion of outlet wall segment 38 to form trap 34B. Outlet wall segment 38 is spaced radially inward from intermediate wall segment 44 and extends to outlet 22. End walls 40A and 40B extend obliquely towards intermediate wall segment 44 and outlet wall segment 38 respectively to form tapered trap 34A and 34B.

In operation, flow received at inlet 20 is diffused radially outward until redirected by transition 30 and axial portion 28. Particles suspended within or being centrifuged by flow tend to accumulate in trap 34A and trap 34B and are thereby removed from the flow prior to outlet 22 and downstream components (e.g., a combustion system of a gas turbine engine). The average particle size accumulated within trap 34A is larger than an average particle size that accumulates within trap 34B due to positions of trap 34A and trap 34B relative to transition 30.

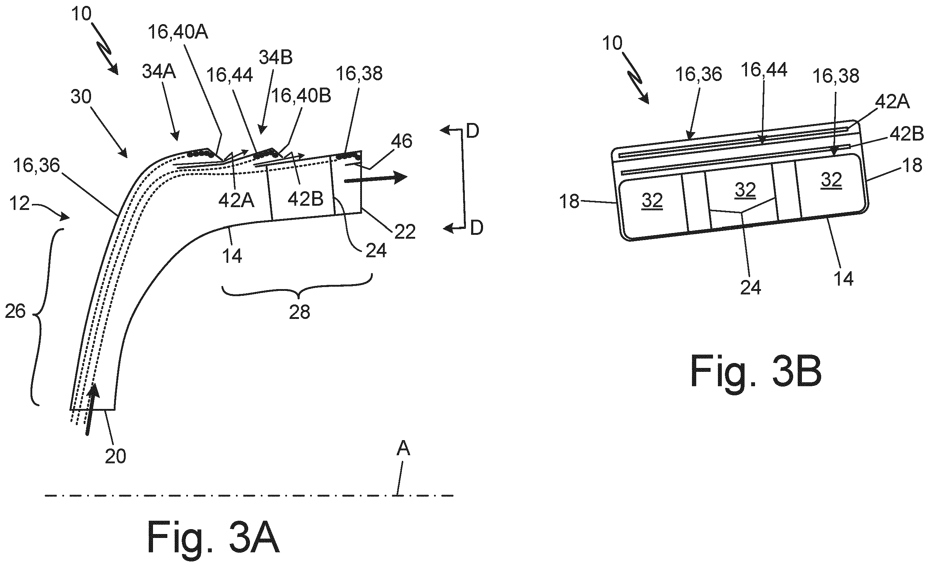

FIG. 3A is a cross-sectional view of diffuser 12 that includes particle separator system 10, which includes traps 34A, 34B, and 34C. FIG. 3B is a cross-sectional view of diffuser 12 taken along line D-D in FIG. 3A that depicts outlet 22 of diffuser 12. Features of diffuser 12 and particle separator system 10 with like numbering are as described in reference to FIG. 1A and FIG. 1B except to the extent each differs from the description below. As depicted by FIG. 3A and 3B, diffuser 12 can be a radial diffuser.

Trap 34A and 34B are disposed between outlet 22 and transition 30 and, more specifically, between vanes 24 and transition 30. Inlet wall segment 36, intermediate wall segment 44, outlet wall segment 38, and end walls 40A-40B are depicted and are identical to corresponding components described in reference to FIG. 2A and FIG. 2B above. Additionally, trap 34A and trap 34B include slot 42A and slot 42B, respectively, which are depicted at a radially inner side of trap 34A and 34B. Particle separation system 10 further includes trap 34C formed between outlet wall segment 38 and lip 46 and disposed between vanes 24 and outlet 22. Lip 46 is disposed radially inward from outlet wall segment 38 and extends from outlet 22 towards transition 30 to overlap outlet wall segment 38 to form trap 34C.

In operation, flow received at inlet 20 is diffused radially outward until redirected by transition 30 and axial portion 28. Particles centrifuged by flow will accumulate in trap 34A, trap 34B, and trap 34C, and are thereby removed from the flow prior to outlet 22 and downstream components (e.g., a combustion system of a gas turbine engine). The average particle size accumulated within trap 34A is larger than an average particle size that accumulates within trap 34B, which has an average particle size that is larger than an average particle size that accumulates within trap 34C due to positions of trap 34A, trap 34B, and trap 34C relative to transition 30.

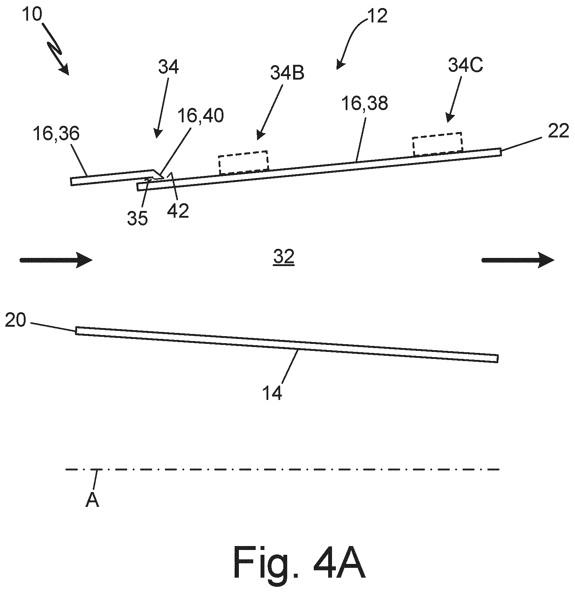

FIG. 4A is a cross-sectional view of diffuser 12 that includes particle separator system 10. As depicted, diffuser 12 can be an axial diffuser that includes inner wall 14, outer wall 16, inlet 20, and outlet 22. Inner wall 14 and outer wall 16 are radially spaced with respect to engine axis A to define annular chamber 32, and extend along engine axis A from inlet 20 to outlet 22. Diffuser 12 is disposed downstream from an axial compressor such that inlet 20 receives compressed flow discharged therefrom. Outlet 22 fluidly communicates with a downstream component such as a combustion system of a gas turbine engine.

Particle separation system 10 includes at least one trap 34. As depicted in FIG. 4A, trap 34 is formed by portions of outer wall 16, where centrifugal acceleration imposed on the flow by the axial compressor tends to propel particles towards outer wall 16. Trap 34 can be located at any position along outer wall 16 between inlet 20 and outlet 22. As shown in FIG. 4A, trap 34 is closer to inlet 20 than outlet 22. Alternative locations of trap 34 are indicated by phantom lines at 34B and 34C. Examples of diffuser 12 can include trap 34 at any of the depicted positions, or at positions intermediate to those depicted. As the position of trap 34 approaches inlet 20, trap 34 tends to collect larger particle number density relative to trap positions that are relatively closer to outlet 22, which tend to collect lower particle number density. Larger particles have higher mass relative to smaller particles and are unable to remain within the flow due to centrifugal acceleration imposed on the flow. Accordingly, the position of trap 34, or multiple traps 34 discussed below, can be selected based on a desired or predetermined average particle size, or average particle sizes in a similar manner to particle separator system 10.

Similar to radial diffuser examples, axial diffuser examples with one or more traps 34 integrated into outer wall 16 can be formed by one or more wall segments. As depicted in FIG. 4A, trap 34 is formed by inlet wall segment 36, outlet wall segment 38, and end wall segment 40. Inlet wall segment 36 extends from inlet 20 to trap 34. Outlet wall segment 38 overlaps with inlet wall segment 36 at trap 34 and extends therefrom to outlet 22. End wall 40 extends from inlet wall segment 36 to outlet wall segment 38 to enclose cavity 35 of trap 34, or to partially enclose cavity 35 and form slot 42 as described above.

In some examples, particle separation system 10 of axial diffusers can include multiple traps 34. For example, particle separation system 10 can include two traps 34, three traps 34, or more than three traps 34 to achieve a desired particle separation. Each trap 34 in a multi-trap particle separation system can include any of the features described above in reference to FIG. 4A. In some examples, trap 34 can be identical except for a position along outer wall 16. In other examples, some or all of traps 34 can have a different shape and/or a different size and can include, but does not have to include, slot 42.

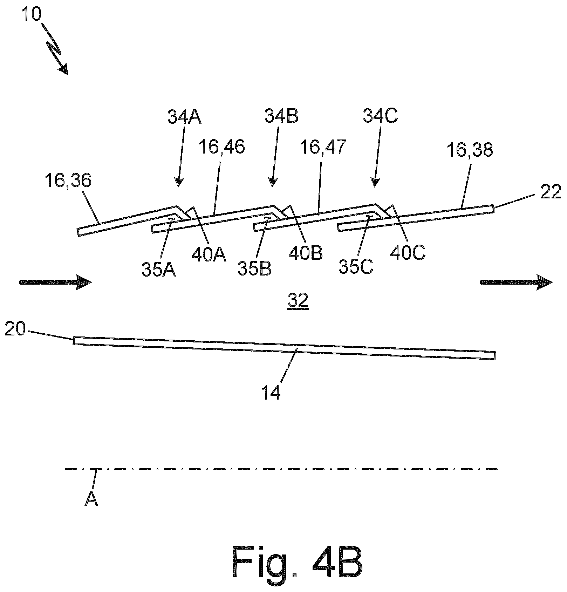

FIG. 4B depicts a cross-sectional view of diffuser 12 that includes particle separator system 10 and multiple traps 34. Features of diffuser 12 and particle separator system 10 with like numbering are as described in reference to FIG. 4A except to the extent each differs from the description below.

As depicted in FIG. 4B, diffuser 12 can be an axial diffuser bound by inner wall 14 and outer wall 16 as well as trap 34A, trap 34B, and trap 34C. Outer wall 16 can include inlet wall segment 36, first intermediate wall segment 46, second intermediate wall segment 47, and outlet wall segment 38, which extend collectively from inlet 20 to outlet 22 of diffuser. Outer wall 16 can further include one or more of end walls 40A, 40B, and 40C.

Trap 34A is formed by overlapping portions of inlet wall segment 36 and first intermediate wall segment 46. End wall 40A extends from inlet wall segment 36 to first intermediate wall segment 46 to enclose an end of trap 34A. Trap 34B is formed by overlapping portions of first intermediate wall segment 46 and second intermediate wall segment 47. End wall 40B extends from first intermediate wall segment 46 to second intermediate wall segment 47 to enclose an end of trap 34B. Trap 34C is formed by overlapping portions of second intermediate wall segment 47 and outlet wall segment 38. End wall 40C extends from second intermediate wall segment 47 to outlet wall segment 38 to enclose an end of trap 34C. Each pair of overlapping wall segments are locally radially spaced to form cavities 35A, 35B, and 35C of respective traps 34A, 34B, and 34C. End walls 40A, 40B, and 40C can extend obliquely with respect to engine axis A such that cavities 34A, 34B, and 34C are tapered towards radially interior ends thereof.

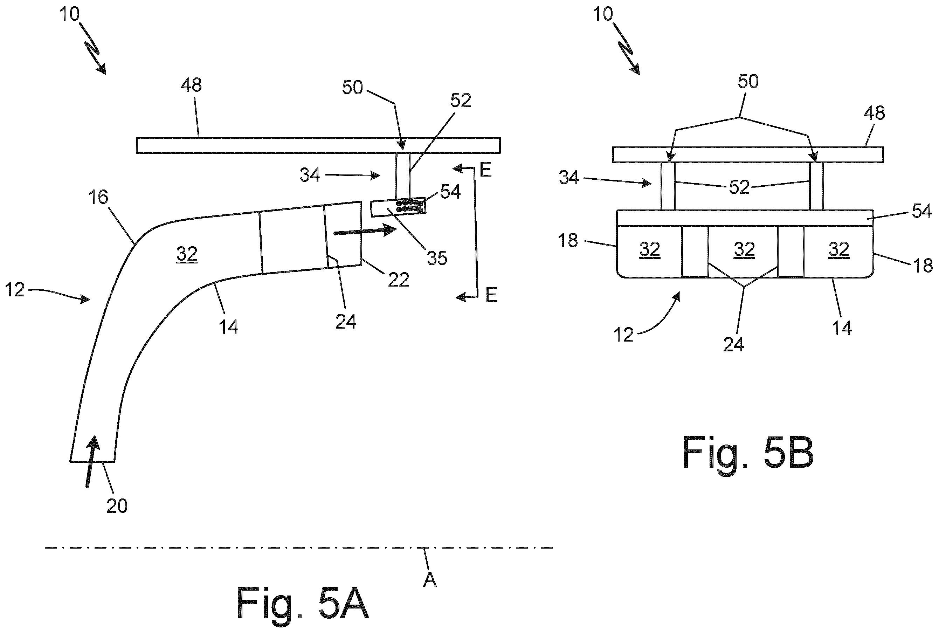

FIG. 5A is a cross-sectional view of diffuser 12 that includes particle separation system 10 in which trap 34 is external to diffuser. Diffuser 12 includes inner wall 14, outer wall 16, inlet 20, and outlet 22 which are analogous to like components of particle separation system 10 depicted by FIG. 1A and FIG. 1B. FIG. 5B is a cross-sectional view along E-E depicting outlet 22 of diffuser 12. As depicted by FIG. 5A and FIG. 5B, diffuser 12 can be a radial diffuser. Casing 48 circumscribes diffuser 12 and overlaps at least a portion thereof and extends downstream along engine axis A from outlet 22 of diffuser 12. However, in lieu of a trap integrated with outer wall 16, particle separator system 10 includes trap 34, which is external to and positioned downstream from outlet 22 and proximate to outer wall 16 to interact with flow along outer wall 16. Since trap 34 is separate from diffuser 12, trap 34 can be configured to be removed during maintenance of the gas turbine engine without requiring removal of diffuser 12.

Trap 34 includes mount 50, stem 52, and trap body 54. In the depicted example, trap 34 is supported from casing 48 at mount 50. Mount 50 can include any mechanical interface suitable to join and support trap 34 to casing 48. Examples of mount 50 can include one or more of a flange, a lip, a pilot diameter, and/or a bolt hole pattern and associated fasteners, among other possible mechanical interfaces. Stem 52 extends from mount 50 radially inward towards outlet 22 of diffuser 12. Stem 52 can be a single body, or multiple bodies, extending from mount 50. As depicted by FIG. 5B, stem 52 includes multiple legs, each extending from mount 50 toward outlet 22 of diffuser 12. Trap body 54 is joined to a distal end (i.e., a radially inner end) of stem 52. Trap body 54 includes walls that define cavity 35 which is open towards diffuser (i.e., an upstream direction as defined by a flow direction through diffuser 12). The opening of trap body 54 coincides with a radially outer region of diffuser cavity 35 adjacent to outer wall 16.

In operation, flow received at inlet 20 is diffused radially outward until redirected by transition 30 and axial portion 28. Particles centrifuged by flow tend to accumulate within trap body 54, and are thereby removed from the flow prior to downstream components (e.g., a combustion system of a gas turbine engine). Since trap 34 is external to diffuser 12 and if provided within a suitable mechanical interface, trap 34 can be replaced and/or cleaned from time to time independently from diffuser 12.

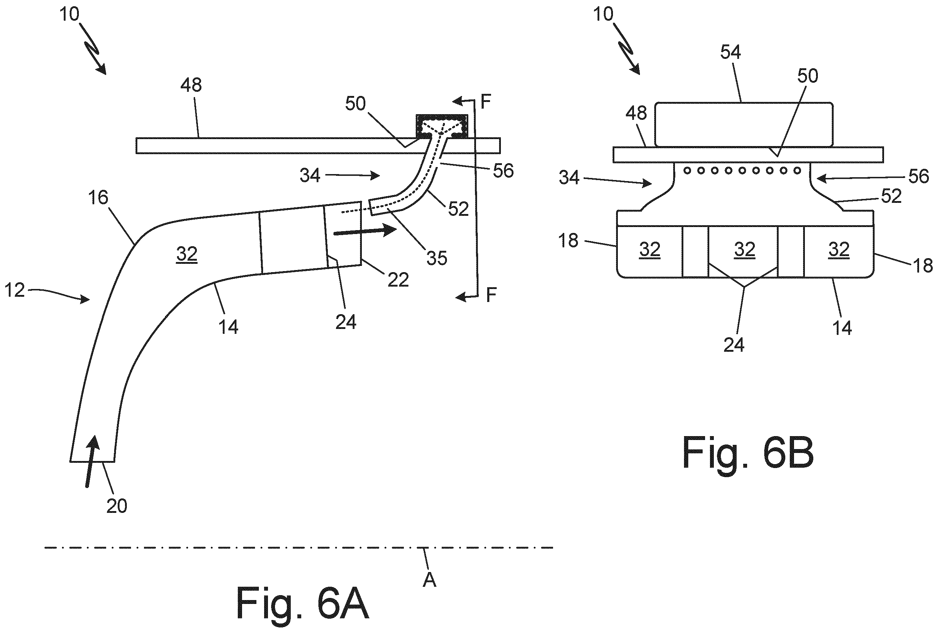

FIG. 6A and FIG. 6B is a cross-sectional view of diffuser 12 that includes particle separation system 52C in which trap 34 is external to diffuser and extends through casing 48. As depicted by FIG. 6A and FIG. 6B, diffuser 12 can be a radial diffuser and can include inner wall 14, outer wall 16, inlet 20, and outlet 22 which are analogous to like components of particle separation system 10 depicted by FIG. 5A and FIG. 5B. FIG. 6B is a cross-sectional view along F-F depicting outlet 22 of diffuser 12. Casing 48 circumscribes diffuser 12 and overlaps at least a portion thereof and extends downstream along engine axis A from outlet 22 of diffuser 12. Trap 34 is external to and positioned downstream from outlet 22 in a manner similar to the trap depicted by FIG. 5A and 5B. However, trap 34 depicted by FIG. 6A and FIG. 6B extends through casing 48.

Trap 34 includes mount 50, stem 52, and trap body 54. In the depicted example, trap 34 is supported from an external side of casing 48 at mount 50. Mount 50 can include any mechanical interface suitable to join and support trap 34 to casing 48 as described above. Stem 52 extends from mount 50 radially inward through casing 48 and towards outlet 22 of diffuser 12. Stem 52 can be a single body, or multiple bodies, extending from mount 50. As depicted by FIG. 6B, stem 52 includes a single body extending from mount 50 through casing 48 toward outlet 22 of diffuser 12. Trap body 54 is joined to a proximal end (i.e., a radially outer end) of stem 52 and can be incorporated into mount 50. Trap body 54 includes walls that define cavity 35 which is open towards diffuser (i.e., an upstream direction as defined by a flow direction through diffuser 12) via stem 52. The opening of stem 52 coincides with a radially outer region of diffuser cavity 35 adjacent to outer wall 16.

In some examples, trap 34 further includes apertures 56, which extend through stem 52 to fluidly connect a particle path to a region exterior of diffuser and exterior to trap 34. As depicted, trap 34 includes multiple apertures 56. In another example, trap 34 can include a single aperture 56. In still other examples, trap 34 can include a slot or an oblong aperture 56. Examples of trap 34 with one or more apertures 56 and/or slots is contemplated herein.

In operation, flow received at inlet 20 is diffused radially outward until redirected by transition 30 and axial portion 28. Particles suspended within or entrained by flow tend to accumulate within trap body 54, and are thereby removed from the flow prior to downstream components (e.g., a combustion system of a gas turbine engine). Since trap 34 is external to diffuser 12 and if provided within a suitable mechanical interface, trap 34 can be replaced and/or cleaned from time to time independently from diffuser 12. Moreover, the external mounting of trap 34 can permit disassembly of trap 34 from an exterior of casing 48 when casing 48 is provided with suitable openings and/or one or more removable covers. Since trap 34 is separate from diffuser 12 and extends through casing 48, trap 34 can be removed, or a portion of trap 34 can be removed during maintenance without requiring removal of diffuser 12.

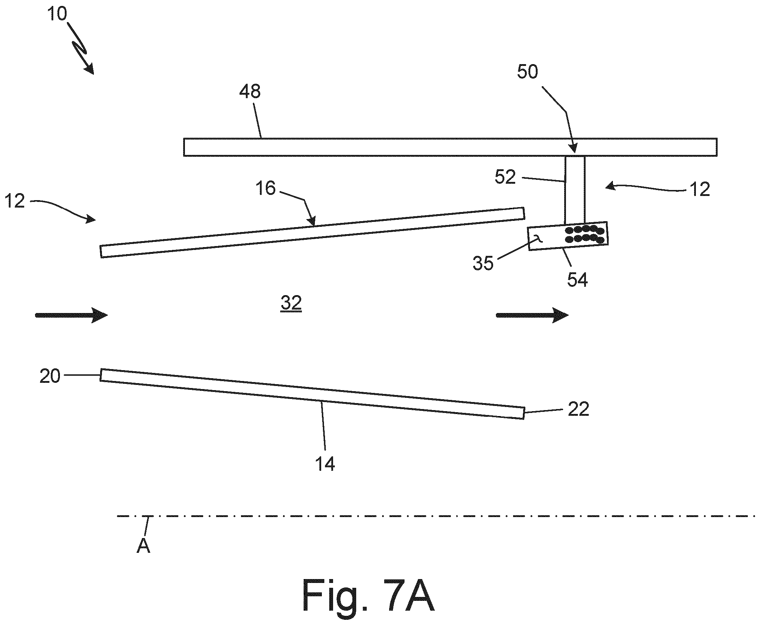

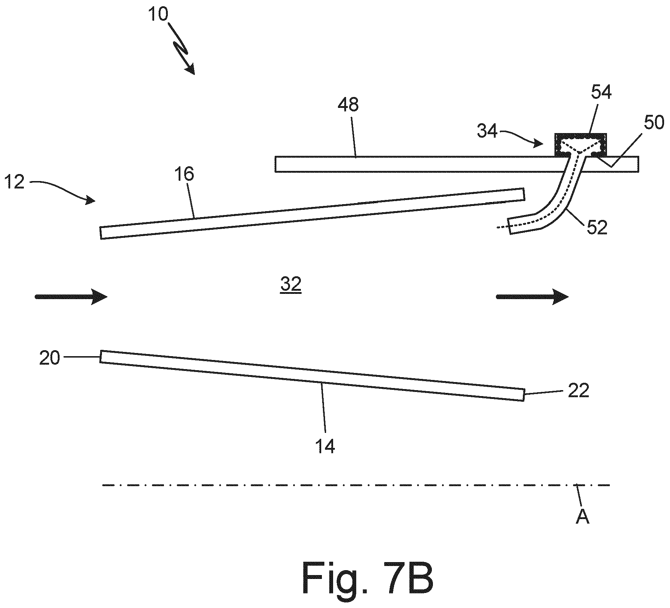

FIG. 7A is a cross-sectional view of diffuser 12 equipped with the particle separator system 52C described by FIG. 5A and FIG. 5B. FIG. 7B is a cross-sectional view of diffuser that includes particle separator system 52 described by FIG. 6A and FIG. 6B. In each case, trap 34 includes the components as described in reference to FIG. 5A-5B, or as described in reference to FIG. 6A-6B except that respective traps open to radially outer regions of diffuser 12, which can be an axial diffuser, rather than downstream of a radial diffuser outlet.

### Discussion of Possible Embodiments

The following are non-exclusive descriptions of possible embodiments of the present invention.

### A particle separation system with a trap integral with a diffuser wall

A particle separator system according to an exemplary embodiment of this disclosure includes, among other possible things, a diffuser extending along an axis to define a fluid path and a trap having walls that bound a cavity in fluid communication with the fluid path. The diffuser includes an inlet, an outlet, an inner wall, and an outer wall. The inlet fluidly communicates with a fluid source. The outlet fluidly communicates with an exhaust. The inner wall and the outer wall diverge from the inlet towards the outlet and, the outer wall is radially outward from the inner wall. The cavity fluidly communicates with the fluid path adjacent to the outer wall. The cavity is open towards the inlet of the diffuser.

The particle separator system of the preceding paragraph can optionally include, additionally and/or alternatively, any one or more of the following features, configurations and/or additional components.

A further embodiment of the foregoing particle separator system, wherein the trap can be formed by the outer wall of the diffuser.

A further embodiment of any of the foregoing particle separator systems, wherein the diffuser can further include a plurality of vanes extending from the inner wall to the outer wall.

A further embodiment of any of the foregoing particle separator systems, wherein the plurality of vanes can be oriented to counteract a swirl direction of the fluid path.

A further embodiment of any of the foregoing particle separator systems, wherein the trap can be disposed between the plurality of vanes and the inlet.

A further embodiment of any of the foregoing particle separator systems, wherein the trap can be disposed between the plurality of vanes and the outlet.

A further embodiment of any of the foregoing particle separator systems, wherein the diffuser can be a radial diffuser.

A further embodiment of any of the foregoing particle separator systems, wherein the diffuser can include a radial portion extending radially outward relative to the axis from the inlet.

A further embodiment of any of the foregoing particle separator systems, wherein the diffuser can include an axial portion extending axially towards the outlet.

A further embodiment of any of the foregoing particle separator systems, wherein the diffuser can include a transition fluidly connecting the radial portion to the axial portion.

A further embodiment of any of the foregoing particle separator systems, wherein the trap can be disposed between the transition and the outlet.

A further embodiment of any of the foregoing particle separator systems, wherein the trap can be disposed between the transition and the plurality of vanes.

A further embodiment of any of the foregoing particle separator systems, wherein the trap can further include a slot fluidly connecting the cavity to a region exterior to the diffuser.

A further embodiment of any of the foregoing particle separator systems, wherein the trap can further include an end face opposite an opening in fluid communication with the fluid path.

A further embodiment of any of the foregoing particle separator systems, wherein the end face can converge towards the slot.

A further embodiment of any of the foregoing particle separator systems, wherein the diffuser is an axial diffuser.

A further embodiment of any of the foregoing particle separator systems, wherein the inner wall and the outer wall define an annular flow path.

### A particle separation system with multiple traps integral with a diffuser wall

A particle separator system according to an exemplary embodiment of this disclosure includes, among other possible things, a diffuser extending along an axis to define a fluid path and a plurality of traps, each trap having walls that bound a cavity in fluid communication with the fluid path. The diffuser includes an inlet, an outlet, an inner wall, and an outer wall. The inlet fluidly communicates with a fluid source. The outlet fluidly communicates with an exhaust. The inner wall and the outer wall diverge from the inlet towards the outlet and, the outer wall is radially outward from the inner wall. The cavity fluidly communicates with the fluid path adjacent to the outer wall. The cavity is open towards the inlet of the diffuser.

The particle separator system of the preceding paragraph can optionally include, additionally and/or alternatively, any one or more of the following features, configurations and/or additional components.

A further embodiment of the foregoing particle separator system, wherein at least one of the plurality of traps can be formed by the outer wall of the diffuser.

A further embodiment of any of the foregoing particle separator systems, wherein each of the plurality of traps can be formed by the outer wall of the diffuser.

A further embodiment of any of the foregoing particle separator systems, wherein the diffuser can further include a plurality of vanes extending from the inner wall to the outer wall.

A further embodiment of any of the foregoing particle separator systems, wherein the plurality of vanes can be oriented to counteract a swirl direction of the fluid path.

A further embodiment of any of the foregoing particle separator systems, wherein at least one of the plurality of traps can be disposed between the plurality of vanes and the inlet.

A further embodiment of any of the foregoing particle separator systems, wherein at least one of the plurality traps can be disposed between the plurality of vanes and the outlet.

A further embodiment of any of the foregoing particle separator systems, wherein the diffuser can be a radial diffuser.

A further embodiment of any of the foregoing particle separator systems, wherein the diffuser can include a radial portion extending radially outward relative to the axis from the inlet.

A further embodiment of any of the foregoing particle separator systems, wherein the diffuser can include an axial portion extending axially towards the outlet.

A further embodiment of any of the foregoing particle separator systems, wherein the diffuser can include a transition fluidly connecting the radial portion to the axial portion.

A further embodiment of any of the foregoing particle separator systems, wherein at least one of the plurality of traps can be disposed between the transition and the outlet.

A further embodiment of any of the foregoing particle separator systems, wherein at least one of the plurality of traps can be disposed between the transition and the plurality of vanes.

A further embodiment of any of the foregoing particle separator systems, wherein at least one of the plurality of traps can further include a slot fluidly connecting the cavity to a region exterior to the diffuser.

A further embodiment of any of the foregoing particle separator systems, wherein at least one of the plurality of traps can further include an end face opposite an opening in fluid communication with the fluid path.

A further embodiment of any of the foregoing particle separator systems, wherein the end face can converge towards the slot.

A further embodiment of any of the foregoing particle separator systems, wherein the plurality of traps can include a first trap and a second trap disposed between the plurality of vanes and the inlet.

A further embodiment of any of the foregoing particle separator systems, wherein the plurality of traps can include a third trap disposed between the plurality of vanes and the outlet.

A further embodiment of any of the foregoing particle separator systems, wherein the diffuser is an axial diffuser.

A further embodiment of any of the foregoing particle separator systems, wherein the inner wall and the outer wall define an annular flow path.

### A particle separation system with a trap external to a diffuser

A particle separator system according to an exemplary embodiment of this disclosure includes, among other possible things, a diffuser extending along an axis to define a fluid path, a casing surrounding the diffuser, and a trap having walls that bound a cavity in fluid communication with the fluid path. The diffuser includes an inlet, an outlet, an inner wall, and an outer wall. The inlet fluidly communicates with a fluid source. The outlet fluidly communicates with an exhaust. The inner wall and the outer wall diverge from the inlet towards the outlet and, the outer wall is radially outward from the inner wall. The trap extends from and is supported by the casing. The cavity fluidly communicates with the fluid path adjacent to the outer wall. The cavity is open towards the inlet of the diffuser.

The particle separator system of the preceding paragraph can optionally include, additionally and/or alternatively, any one or more of the following features, configurations and/or additional components.

A further embodiment of the foregoing particle separator system, wherein the trap can be disposed downstream from the outlet of the diffuser.

A further embodiment of any of the foregoing particle separator systems, wherein the trap can include a mount affixed to the casing.

A further embodiment of any of the foregoing particle separator systems, wherein the mount can be affixed to an exterior side of the casing.

A further embodiment of any of the foregoing particle separator systems, wherein the mount can form the cavity.

A further embodiment of any of the foregoing particle separator systems, wherein the trap can include a stem extending radially inward from the mount.

A further embodiment of any of the foregoing particle separator systems, wherein the trap can include a stem extending radially inward from the mount through the casing to an opening.

A further embodiment of any of the foregoing particle separator systems, wherein the stem can extend radially inward from the mount to an opening, and wherein the stem can form the cavity.

A further embodiment of any of the foregoing particle separator systems, wherein the stem can extend radially inward from the mount to an opening, and wherein the stem can define a particle path that fluidly connects the cavity to the opening.

A further embodiment of any of the foregoing particle separator systems, wherein the trap can include a trap body at a distal end of the stem that forms the cavity.

A further embodiment of any of the foregoing particle separator systems, wherein the trap can further include a plurality of apertures extending through the stem radially outward from the outer wall and radially inward from the casing that can fluidly connect the particle path with a region exterior of the diffuser.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention is not limited to the particular embodiment(s) disclosed, but that the invention will include all embodiments falling within the scope of the appended claims.

## Claims

1. A particle separator system (10) comprising:
a diffuser (12) extending along an axis (A) to define a fluid path, the diffuser (12) comprising:
an inlet (20) fluidly communicating with a fluid source;
an outlet (22) fluidly communicating with an exhaust; and
an inner wall (14) and an outer wall (16) that diverge from the inlet (20) towards the outlet (22), wherein the outer wall (16) is radially outward from the inner wall (14) relative to the axis (A); and
a trap (34) having walls (36, 38, 40) that bound a cavity (35) in fluid communication with the fluid path adjacent to the outer wall (16), wherein the cavity (35) is open towards the inlet (20).

2. The particle separator of claim 1, wherein the trap (34) is formed by the outer wall (16) of the diffuser (12).

3. The particle separator of claim 1 or 2, wherein the diffuser (12) further comprises:
a plurality of vanes (24) oriented to counteract a swirl direction of the fluid path, wherein the trap (34) is disposed between the plurality of vanes (24) and the inlet (20).

4. The particle separator of claim 1 or 2, wherein the diffuser (12) further comprises:
a plurality of vanes (24) oriented to counteract a swirl direction of the fluid path, wherein the trap (34) is disposed between the plurality of vanes (24) and the outlet (22).

5. The particle separator of claim 2, wherein the diffuser (12) is a radial diffuser and comprises:
a radial portion (26) extending radially outward relative to the axis (A) from the inlet (20);
an axial portion (28) extending axially towards the outlet (22); and
a transition (30) fluidly connecting the radial portion (26) to the axial portion (28);
wherein the trap (34) is disposed between the transition (30) and the outlet (22).

6. The particle separator of claim 5, wherein the diffuser (12) further comprises:
a plurality of vanes (24) oriented to counteract a swirl direction of the fluid path, and wherein the trap (34) is disposed between the transition (30) and the plurality of vanes (24).

7. The particle separator of any preceding claim, wherein the trap (34) further includes a slot (42) fluidly connecting the cavity (35) to a region exterior to the diffuser (12).

8. The particle separator of claim 7, wherein the trap (34) further includes an end face (40) opposite an opening in fluid communication with the fluid path, and wherein the end face (40) converges towards the slot (42).

9. The particle separator system of claim 1, comprising a plurality of the traps (34), wherein, optionally, the diffuser (12) further comprises:
a plurality of vanes (24) oriented to counteract a swirl direction of the fluid path, and wherein the plurality of traps (34) includes a first trap (34A) and a second trap (34B) disposed between the plurality of vanes (24) and the inlet (20), optionally wherein the plurality of traps (34) includes a third trap (34C) disposed between the plurality of vanes (24) and the outlet (22).

10. The particle separator system of claim 1, further comprising a casing (48) surrounding the diffuser (12), the trap (34) extending from and supported by the casing (48).

11. The particle separator system of claim 10, wherein the trap (34) is disposed downstream from the outlet (22) of the diffuser (12).

12. The particle separator of claim 10 or 11, wherein the trap (34) comprises:
a mount (50) affixed to the casing (48);
a stem (52) extending radially inward from the mount (50); and
a trap body (54) at a distal end of the stem (52), wherein the trap body (54) forms the cavity (35).

13. The particle separator of claim 10 or 11, wherein the trap (34) comprising:
a mount (50) affixed to the casing (48); and
a stem (52) extending radially inward from the mount (50) to an opening, wherein the stem (50) forms the cavity (35).

14. The particle separator of claim 10 or 11, wherein the trap (34) comprises:
a mount (50) affixed to an exterior side of the casing (48), wherein the mount (50) forms the cavity (35); and
a stem (52) extending radially inward from the mount (50) through the casing (48) to an opening, wherein stem (52) defines a particle path that fluidly connects the opening to the cavity (35).

15. The particle separator of claim 14, wherein the trap (34) further includes a plurality of apertures (56) extending through the stem (52) radially outward from the outer wall (16) and radially inward from the casing (48) that fluidly connect the particle path with a region exterior of the diffuser (12).
